# EUROPEAN PATENT SPECIFICATION

(11) **EP 2 268 475 B1**
(45) Date of publication and mention of the grant of the patent: **26.09.2012**
(21) Application number: 09735833.7
(22) Date of filing: 09.04.2009
(51) Int. Cl.: B29C 70/30, B29C 70/38, B29C 33/38

(54) **Method of tape laying of thermoplastic composite materials**
Verfahren zur Bandablage thermoplastischer Verbundmaterialien
Procédé amélioré de pose de ruban de matériaux composites thermoplastiques

(30) Priority: 23.04.2008 GB 0807398
(43) Date of publication of application: 05.01.2011
(73) Proprietor: Airbus Operations Limited, Bristol BS99 7AR (GB)
(72) Inventor: BURCHELL, Peter, Bristol BS99 7AR (GB)
(74) Representative: Wardle, Callum Tarn
(86) International application number: PCT/GB2009/050349
(87) International publication number: WO 2009/130493

(56) References cited:
- WO-A-00/32381
- WO-A-2007/039085
- US-A1- 2007 251 641
- B. TOMAS ASTRÖM: "Thermoplastic composites manufacturing" December 2001 (2001-12), ASM INTERNATIONAL , USA , XP002532918 ISBN: 0-87170-703-9 page 570 - page 578

## Description

Composite materials are now commonly used as structural materials in a variety of fields of endeavour. One such area is the aerospace industry in which structural composite materials are used to form an increasing proportion of an aircraft structure. Within this context a composite material is considered to be a polymer matrix reinforced with fibres or a mesh, most typically carbon fibres but possibly fibres of other material or a metallic mesh. The composite materials tend to fall within one of two main families of materials, those composites having thermoplastic matrices and those having thermoset matrices. Thermoset composites need to be cured, a process by which the chemical structure of the polymer matrix is irreversibly changed, usually by the application of heat and optionally pressure. Once cured, the thermoset composite has its final properties of rigidity, hardness and strength and cannot be reverted to its un-cured pliable condition. In contrast, thermoplastic composites do not require curing, having their required structural properties when cool and softening when heated. Thermoplastic composites may be repeatedly softened by heat and hardened by cooling, since when heated they undergo a substantially physical, rather than chemical, change.

Both thermoplastic and thermoset composites can be formed into thin flexible sheets or strips, referred to as tape. This allows composite components to be formed by laying down the composite tape in a moulding tool, with the thickness of the component being locally varied according to the number of layers of composite tape laid down and also the direction of one or more layers of the tape being controllable so as to control the final structural properties of the formed composite component. The laid up components are then "consolidated", a process which in both cases involves heating the composite structure such that the thermoset or thermoplastic matrix softens to a sufficient degree so as to form a single unified matrix and applying sufficient pressure to the softened matrix to expel any trapped air from the matrix.

In terms of final structural properties, thermoplastic composites have superior impact and damage resistance properties to those of thermoset composites and are generally tougher and more resistant to chemical attack, all of which are preferable properties within aerospace applications. Furthermore, since thermoplastic composites may be repeatedly reheated and remoulded they are inherently recyclable, which is an increasing important consideration.

However, thermoset composite tape has one property that in relation to the laying up process currently makes it the material of choice for use in aerospace composite components. This property is that the thermoset tape is inherently sticky, or is said to have tack. This tackiness allows the thermoset tape to adhere to both the complex shaped mould surfaces often required for the composite components within the aerospace industry and also for separate layers of the thermoset tape to adhere to one another once the initial layer has been applied to the mould surface, thus making the laying up process relative easy and convenient to physically manage.

In contrast, thermoplastic composite tape has no tackiness. Consequently, it is problematic to make the thermoplastic composite tape adhere to complex mould surfaces during the lay up process. Existing lay up techniques combine local consolidation and melting of the thermoplastic composite material to enable the initial, base, layer to be built up only as long as the base layer is firmly held to the surface of the mould tool. Previously proposed solutions to this problem have included applying a separate double-sided adhesive tape as an initial layer to the mould surface to which the first layer of thermoplastic composite tape subsequently adheres. Similarly, it has also been proposed to spray an adhesive to the surface of the mould. Whilst both proposed solutions allow the first layer of thermoplastic composite tape to be successfully applied to complex shaped mould surfaces, they introduce their own problem of how to subsequently remove the formed composite component from the mould when the laying up process is complete, since the component is now effectively bonded to the mould surface. Consequently, it is still presently preferred to use thermoset composite materials despite the superior physical properties provided by thermoplastic composite materials.

The article "Thermoplastic composites manufacturing", published in the December 2001 edition of ASM International, discusses the lay-up of thermoplastic prepregs in which the mating surfaces of the previously laid ply and the incoming ply are melted and subsequently joined under pressure. This article does not address the problem of adhering the base ply to a complex mould surface. WO00/32381 discloses a machine for laying up fabric to produce a laminate. The machine has a forming station at which the fabric is cut. The forming station may include a table on which the piece of fabric is placed and the table may have a perforated upper surface for applying a vacuum to the surface of the fabric lying on the table to suck the fabric into firm contact with the table. US2007/0251641 discloses a similar machine in which a composite laminate may be held against a table by vacuum, the vacuum being transmitted drills in the table.

According to a first aspect of the present invention there is provided a method of laying up a thermoplastic composite in a mould tool, the method comprising providing a mould tool having a mould surface, at least a portion of the mould tool comprising a micro-porous metal, applying a negative pressure to the micro-porous metal so as to create a negative pressure at the mould surface, laying an initial layer of thermoplastic composite material onto the mould surface, whereby the thermoplastic composite material is held against the mould surface by virtue of the negative pressure at the mould surface, and consolidating the thermoplastic composite material, the step of consolidating including heating the thermoplastic composite material.

Additionally or alternatively, the step of consolidating the thermoplastic composite material may comprise locally heating the material. Preferably, the local heating step comprises laser welding the thermoplastic composite material.

Additionally or alternatively, the method may further comprise subsequently laying up and consolidating subsequent layers of thermoplastic composite material.

Additionally or alternatively, the method may further comprise, subsequent to the consolidation step, exerting a positive pressure through the micro-porous metal to the mould surface so as to release the consolidated thermoplastic composite material from the mould tool.

The thermoplastic composite material may be provided in tape form and may consequently be laid up using automated tape-laying techniques.

The step of applying a negative pressure to the micro-porous metal may comprise applying at least a partial vacuum to a portion of the micro-porous metal other than the mould surface.

The mould tool may comprise at least one region forming a portion of the mould surface that is formed from a non-porous material.

Embodiments of the present invention are described below, by way of non-limiting illustrative example only, with reference to the accompanying figures of which:

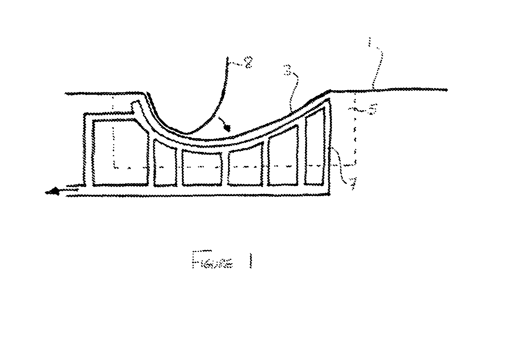

Figure 1 schematically illustrates the use of a micro-porous mould tool according to an embodiment of the present invention.

Figure 1 schematically illustrates an improved method of tape laying a thermoplastic composite material according to an embodiment of the present invention. A mould tool 1 is provided having a mould surface 3 that defines the desired outer surface shape and configuration of a composite component to be formed. The portion of the mould tool in which the mould surface 3 is formed is itself formed from a porous material, one example of which being micro-porous aluminium. The entirety of the mould tool 1 may be formed from the porous material or alternatively the porous material 5 may be used only in the immediate area of the mould surface 3, with the remaining portions of the mould tool I being formed from other suitable non-porous materials, for example such as mild steel. The porous material 5 has a labyrinth of air passages 7 formed therein, which may be zoned by incorporation of solid barriers and control valves.

To lay an initial layer of thermoplastic tape 8 according to embodiments of the present invention a negative pressure is applied to the air passages 7 within the mould tool 1 such that air is in turn drawn through the porous material 5 so as to form a negative pressure region at the mould surface 3. Thermoplastic composite tape, or broader fabric surface scrim, is then laid over the mould surface in a desired configuration and the thermoplastic composite tape is held against the mould surface 3 by virtue of the negative pressure being applied to the mould surface via the pores within the porous material 5 and the air passages 7 formed in the mould tool 1. In preferred embodiments the individual sections of thermoplastic composite tape 8 are thermally welded to one another in a consolidation process. The welding operation may be achieved concurrently with the tape-laying process using known automated tape-laying machines incorporating local heating equipment into the tape-laying head. For example, the tape-laying head may include an infra-red laser to achieve the local heating and welding process. Subsequent layers of the thermoplastic composite tape 8 are also thermally consolidated to the previously laid composite tape. When the complete composite component has been laid up within the mould and simultaneously consolidated the component can be released from the mould tool 1 either by simple mechanical removal of the complete component from the mould, i.e. a simple lifting operation, or may have its release from the mould facilitated by applying a positive pressure to the air passage 7 so as to exert, via the pores within the micro porous material 5, a positive pressure at the mould surface 3, effectively "blowing" the finished composite component from the mould tool 1.

The porous materials 5 suitable for use in accordance with embodiments of the present invention typically have a mean pore diameter measured in tens of microns. For example, micro-porous aluminium typically has a mean pore diameter of approximately 15 microns, providing an overall porosity of the material of approximately 15%. The relatively small size of such porous materials in conjunction with the characteristically relatively high viscosity of thermoplastic matrices, even when heated sufficiently to allow consolidation, prevent the thermoplastic material from being drawn into the pores, thus ensuring a high quality of surface finish to the formed composite component and preventing blocking of the pores during the tape laying process.

As previously mentioned, the thermoplastic material must be heated to allow consolidation of the separate pieces into a unified thermoplastic matrix. The temperature at which this consolidation begins to occur is generally referred to as the glass transition (Tg) temperature and this will vary depending upon the particular thermoplastic matrix material. For example Tg of PEEK is 143°C, PEKK is 156°C and PPS is 89°C. Depending upon the consolidation process used, it may be possible to use a thermoplastic matrix material having a Tg higher than the maximum permitted mould temperature stipulated for the selected porous material, since if laser welding consolidation is used, for example, the heating will be highly localised and relatively transient, such that the heat transferred to the porous material is insufficient to raise the temperature of the mould material beyond its permitted maximum. The thermal conductivity of the porous material will also be a contributory factor, since a porous material with a relatively high thermal conductivity will tend to conduct excessive heat away from a localised heating source, i.e. the tape laying and welding head, thus mitigating against a rapid local build-up of heat within the porous material. Equally, if the maximum permitted temperature of the porous mould material is greater than the glass transition temperature of the selected thermoplastic matrix material, then it may be possible and preferable to perform consolidation of the thermoplastic material by means of generalised heating of the laid up layers, e.g. by performing the laying up operation within a conventional heating oven, although this would still require at least localised welding of the overlying plies to hold the laid up stack together.

By applying a negative pressure to the mould surface 3 of the porous material 5, for example by connecting the air passage 7 to a vacuum pump, the thermoplastic tape is securely held against the mould surface of the porous material where the mould surface has a complex shape or where the thermoplastic tape would otherwise fall away from the mould surface due to gravity. In those areas of the mould in which the thermoplastic tape is unlikely to move even when no negative pressure is applied to the porous mould material, such as areas of level mould surface, those areas may be formed using non-porous grades of the mould material. (It is preferred to use the same mould material to avoid any problems arising from differing rates of thermal expansion & contraction in different materials.) Additionally, in certain embodiments of the present invention it will be possible for the porous material 5 to be formed by drilling a number of individual holes into an otherwise non-porous material. However, this is not a preferred embodiment, since the drilling process itself will be time consuming and the resulting holes must still be small enough relative to the viscosity of the selected thermoplastic matrix material to avoid the thermoplastic material flowing into the pores, and blocking them, when the thermoplastic tape is heated during consolidation.

## Claims

1. A method of laying up a thermoplastic composite in a mould tool, the method comprising:
providing a mould tool (1) having a mould surface (3), at least a portion of the mould tool comprising a micro-porous metal (5);
applying a negative pressure to the micro-porous metal (5) so as to create a negative pressure at the mould surface (3);
laying an initial layer of thermoplastic composite material (8) onto the mould surface (3), whereby the thermoplastic composite material is held against the mould surface by virtue of the negative pressure at the mould surface; and
consolidating the thermoplastic composite material (8), the step of consolidating including heating the thermoplastic composite material.

2. The method of claim 1, wherein the step of consolidating the thermoplastic composite material (8) includes locally heating said material.

3. The method of claim 2, wherein the local heating step comprises laser welding the thermoplastic composite material (8).

4. The method of any preceding claim further comprising subsequently laying up and consolidating subsequent layers of thermoplastic composite material (8).

5. The method of any preceding claim further comprising subsequent to the consolidation step exerting a positive pressure through the micro-porous metal (5) to the mould surface (3) so as to release the consolidated thermoplastic composite material (8) from the mould tool (1).

6. The method of any preceding claim, wherein the thermoplastic composite material (8) is provided in tape form and is laid up using automated tape-laying techniques.

7. The method of any preceding claim, wherein the step of applying a negative pressure to the micro-porous metal (5) comprises applying at least a partial vacuum to a portion of the micro-porous metal other than the mould surface (3).

8. The method of any preceding claim, wherein the mould tool (1)comprises at least one region forming a portion of the mould surface (3) that is formed from a non-porous material.

## Patentansprüche

1. Verfahren zum Laminieren eines thermoplastischen Verbundstoffs in einem Formungswerkzeug, wobei das Verfahren umfasst:
Bereitstellen eines Formungswerkzeugs (1), die eine Formungsfläche (3) aufweist, wobei wenigstens ein Teil des Formungswerkzeugs ein mikroporöses Metall (5) enthält,
Anwenden eines negativen Drucks auf das mikroporöse Metall (5), so dass an der Formungsfläche (3) ein negativer Druck erzeugt wird,
Ablegen einer Anfangsschicht eines thermoplastischen Verbundmaterials (8), auf die Formungsfläche (3), wodurch das thermoplastische Verbundmaterial aufgrund des negativen Drucks an der Formungsfläche gegen die Formungsfläche gehalten wird, und
Verfestigen des thermoplastischen Verbundmaterials (8), wobei der Schritt des Verfestigens das Erwärmen des thermoplastischen Verbundmaterials beinhaltet.

2. Verfahren nach Anspruch 1, bei dem der Schritt des Verfestigens des thermoplastischen Verbundmaterials (8) das lokale Erwärmen des Materials beinhaltet.

3. Verfahren nach Anspruch 2, bei dem der lokale Erwärmungsschritt Laserschweißen des thermoplastischen Verbundmaterials (8) umfasst.

4. Verfahren nach einem der vorherigen Ansprüche, ferner umfassend das anschließende Laminieren und Verfestigen nachfolgender Schichten von thermoplastischem Verbundmaterial (8).

5. Verfahren nach einem der vorherigen Ansprüche, bei dem weiterhin auf den Verfestigungsschritt folgend ein positiver Druck durch das mikroporöse Metall (5) auf die Formungsfläche (3) angewandt wird, um das verfestigte thermoplastische Verbundmaterial (8) aus dem Formungswerkzeug (1) herauszulösen.

6. Verfahren nach einem der vorherigen Ansprüche, bei dem das thermoplastische Verbundmaterial (8) in Bandform vorliegt und unter Verwendung automatischer Bandverlegungstechniken laminiert wird.

7. Verfahren nach einem der vorherigen Ansprüche, bei dem der Schritt des Anwenden eines negativen Drucks auf das mikroporöse Metall (5) das Anwenden wenigstens eines partiellen Vakuums auf einen Teil des mikroporösen Metalls, der keine Formungsfläche (3) ist.

8. Verfahren nach einem der vorherigen Ansprüche, bei dem das Formungswerkzeug (1) wenigstens einen Bereich enthält, der einen Teilbereich der Formungsfläche (3) bildet, der aus einem nicht-porösen Material gebildet ist.

## Revendications

1. Procédé de pose d'un composite thermoplastique dans un outil de moule, le procédé comprenant les étapes consistant à _{:}
fournir un outil de moule (1) ayant une surface de moule (3), au moins une portion de l'outil de moule comprenant un métal microporeux (5) ;
appliquer une pression négative sur le métal microporeux (5) de manière à créer une pression négative au niveau de la surface de moule (3) ;
poser une couche initiale de matériau composite thermoplastique (8) sur la surface de moule (3), moyennant quoi le matériau composite thermoplastique est maintenu contre la surface de moule grâce à la pression négative au niveau de la surface de moule ; et
consolider le matériau composite thermoplastique (8), l'étape de consolidation comprenant le chauffage du matériau composite thermoplastique.

2. Procédé selon la revendication 1, dans lequel l'étape de consolidation du matériau composite thermoplastique (8) comprend le chauffage local dudit matériau.

3. Procédé selon la revendication 2, dans lequel l'étape de chauffage local comprend le soudage au laser du matériau composite thermoplastique (8).

4. Procédé selon l'une quelconque des revendications précédentes, comprenant en outre par la suite la pose et la consolidation de couches ultérieures de matériau composite thermoplastique (8).

5. Procédé selon l'une quelconque des revendications précédentes, comprenant en outre à la suite de l'étape de consolidation le fait d'exercer une pression positive à travers le métal microporeux (5) sur la surface du moule (3) de sorte à libérer le matériau composite thermoplastique (8) consolidé de l'outil de moule (1).

6. Procédé selon l'une quelconque des revendications précédentes, dans lequel le matériau composite thermoplastique (8) est fourni sous la forme d'une bande et est posé à l'aide de techniques de pose de bande automatisée.

7. Procédé selon l'une quelconque des revendications précédentes, dans lequel l'étape d'application d'une pression négative sur le métal microporeux (5) comprend l'application d'au moins un vide partiel à une portion du métal microporeux autre que la surface de moule (3).

8. Procédé selon l'une quelconque des revendications précédentes, dans lequel l'outil de moule (1) comprend au moins une région formant une portion de la surface de moule (3) qui est formée à partir d'un matériau non poreux.
